(19) Europäisches Patentamt
European Patent Office
Office européen des brevets

(11) Veröffentlichungsnummer: **0 416 446 A1**

(12) **EUROPÄISCHE PATENTANMELDUNG**

(21) Anmeldenummer: **90116476.4**

(22) Anmeldetag: **28.08.90**

(51) Int. Cl.5: **B65D 19/18, B23Q 7/14**

(30) Priorität: **05.09.89 DE 3929409**

(43) Veröffentlichungstag der Anmeldung:
**13.03.91 Patentblatt 91/11**

(84) Benannte Vertragsstaaten:
**DE FR GB SE**

(71) Anmelder: **Fritz Schäfer Gesellschaft mit beschränkter Haftung**
**Fritz-Schäfer-Strasse 20**
**W-5908 Neunkirchen(DE)**

(72) Erfinder: **Schäfer, Gerhard**
**Oberes Gerstenfeld 2**
**W-5908 Neunkirchen-Salchendorf(DE)**

(74) Vertreter: **Müller, Gerd et al**
**Patentanwälte**
**HEMMERICH-MÜLLER-GROSSE-POLLMEIER--**
**MEY-VALENTIN Hammerstrasse 2**
**W-5900 Siegen 1(DE)**

(54) **Aufnahme-, Transport- und Bereitstellungs-Palette für Werkstücke.**

(57) Beschrieben wird eine Aufnahme-, Transport- und Bereitstellungs-Palette (1) für Werkstücke, insbesondere hochwertige Werkstücke, mit einem Stützunterbau (2) und von diesem getragenen Werkstückauflagen. Gekennzeichnet ist diese Palette (1) dadurch, daß der Stützunterbau (2) einen von Füßen (4) bzw. (4a), (4b) und/oder Laufprofilen (5) getragenen Rahmen (6) aufweist, daß dieser Rahmen (6) zu den Füßen (4) bzw. (4a), (4b) und/oder Laufprofilen (5) hin durch eine Bodenplatte (7) abgeschirmt ist, und daß die Bodenplatte (7) ein durch eine Vielzahl von abwechselnd hinter- und nebeneinanderliegend vorgesehenen Noppen bzw. Höckern (9) und/oder Nuten bzw. Rinnen (10) gebildetes Profil (8) aufweist.

FIG.1

EP 0 416 446 A1

# AUFNAHME-, TRANSPORT- UND BEREITSTELLUNGS-PALETTE FÜR WERKSTÜCKE

Die Erfindung betrifft eine Aufnahme-, Transport- und Bereitstellung-Palette für Werkstücke, insbesondere hochwertige Werkstücke, nach dm Oberbegriff des Anspruchs 1.

Zur Aufnahme, zum Transport und zur Bereitstellung hochwertiger Werkstücke, die insbesondere in automatisierten Produktionsanlagen in großem Umfang hergestellt bzw. bearbeitet werden, ist bereits die Benutzung von Paletten vorgeschlagen worden, welche so ausgelegt sind, daß sie sich - je nach Bedarf - zur Aufnahme unterschiedlicher Werkstücke vorrichten bzw. umbauen lassen.

Die bekannten Paletten gattungsgemäßer Art lassen sich zwar mit relativ großem Zeitaufwand nach dem Baukastensystem auf verschiedene Einsatzzwecke abstimmen. Sie haben jedoch den Nachteil, daß die Werkstückaufnahmen meist nicht sehr fest fixiert werden können und sich daher schon bei leichten Erschütterungen, wie sie in Fertigungsbetrieben häufig vorkommen, in unerwünschter Weise lösen können. Nachteilig ist bei diesen Paletten aber auch, daß die nach den verschiedenen Arbeitsgängen jeweils auf die Paletten gebrachten Werkstücke in beträchtlichem Maße mit Kühlflüssigkeiten oder dergleichen, bspw. Schneidöl, behaftet sind, das im Ruhezu stand von den Werkstücken abtropft und dadurch zu einer unerwünschten Verunreinigung der Lager- und Abstellplätze bzw. Transportsysteme führt.

Die Erfindung zielt nun darauf ab, eine gattungsgemäße Aufnahme-, Transport- und Bereitstellungs-Palette anzugeben, die nicht nur in Anpassung an die verschiedenartigen Bedürfnisse leicht umrüstbar ist, sondern zugleich die darauf befindlichen hochwertigen bzw. empfindlichen Werkstücke gegen Beschädigung schützt sowie darüber hinaus gewährleistet, daß die von den Werkstücken abtropfende Behandlungsflüssigkeit, z.B. Schneidöl oder dergleichen, sicher aufgefangen wird.

Die Lösung dieser Aufgabe wird erfindungsgemäß grundsätzlich durch die Kennzeichnungsmerkmale des Anspruchs 1 dadurch erreicht, daß der Rahmen des Stützunterbaues als ein Doppelrahmen mit zwei zueinander parallelen und durch eine Nut voneinander getrennten Stegen ausgebildet ist. Als wichtig erweist es sich dabei ferner, daß nach Anspruch 2 die Oberkante des Rahmens bzw. Doppelrahmens das höchste Niveau der Noppen bzw. Höcker an der Bodenplatte um ein gewisses Maß überragt, so daß ein hohes Speichervolumen für aufzufangende Behandlungsflüssigkeiten zur Verfügung steht.

Bewährt hat es sich dabei, wenn gemäß Anspruch 3 die Oberkante des Rahmens um ein Maß über das höchste Niveau der Noppen bzw. Höcker an der Bodenplatte hochragt, welches mindestens der Tiefe der die Noppen bzw. Höcker gegeneinander abgrenzenden Nuten bzw. Rinnen entspricht. Selbst wenn daher die aufgefangene Behandlungsflüssigkeit die Nuten bzw. Rinnen über ihre gesamte Profilhöhe ausfüllt, kann sie in diesem Falle nicht von der Bodenplatte ablaufen, weil sie hieran durch den Doppelrahmen gehindert wird.

Nach Anspruch 4 ist weiterhin in Vorschlag gebracht, daß die die beiden Stege des Doppelrahmens gegeneinander abgrenzende Nut mit ihrem Nutgrund etwa auf gleicher Ebene mit dem Grund der die Noppen bzw. Höcker gegeneinander abgrenzenden Nuten bzw. Rinnen liegt, so daß sich zwischen den beiden Stegen des Doppelrahmens eine relativ schmale aber tiefe Nut ergibt.

Für viele Einsatzzwecke ist es auch noch von wesentlicher Bedeutung, daß die auf der Palette ruhenden Werkstücke auch nach den Seiten hin gegen irgendwelche schädigenden Einflüsse abgeschirmt werden können. Deshalb schlägt Anspruch 5 vor, daß in die Nut zwischen den Stegen des Doppelrahmens Seitenwände mit angepaßten Fußteilen lösbar einzusetzen sowie an ihren Enden jeweils über Eckprofile zur Bildung eines Kastenaufsatzes miteinander verbindbar sind. Als Träger für die Eckprofile werden erfindungsgemäß nach Anspruch 6 im Bereich der Eckzonen des Doppelrahmens Adapterstücke lösbar eingesetzt, die wenigstens einen in die Nut zwischen beiden Rahmenstegen einrückbaren Bogensteg sowie einen an die Innenkontur des inneren Rahmensteges angepaßten Stützwinkel aufweisen. Dabei kann nach Anspruch 7 der Stützwinkel an seinem unteren Ende einen seine Schenkel einstückig verbindenden, horizontalen Bodenabschnitt und an seinem oberen Ende eine auf der Winkelhalbierenden zu seinen Schenkeln nach auswärts ragende, horizontale Zunge tragen, wobei einerseits der Stützwinkel eine nach unten über den Bodenabschnitt hinausragende, dornartige Verlängerung mit Winkelprofil trägt, während andererseits die Zunge an ihrer Unterseite den Bogensteg hält und von ihrer Oberseite ein dornartiger Fortsatz hochragt, der als Halter in ein Eckprofil einrückbar ist. Dabei enthält die Bodenplatte in ihren an den Rahmen anschließenden Eckbereichen jeweils Durchbrüche, die der Aufnahme der dornartigen Verlängerung der Adapterstücke dienen und deren Winkelprofil angepaßt sind. Der Bodenabschnitt am Stützwinkel der Adapterstücke ist in eine Eckmulde der Bodenplatte versenkbar. Jede Eckmulde ist durch einen Kragensteg begrenzt ist, dessen Höhe der Höhe der Noppen bzw. Höcker entspricht. Es wird auf diese Art und Weise nicht nur ein optimal fester Sitz für die der Halterung der Eckprofile dienenden Adapterstücke sichergestellt, sondern darüber hinaus auch verhindert, daß Behandlungsflüssigkeit in den Eckbereichen der Bodenplatte entweichen kann.

In baulicher Hinsicht hat es sich nach Anspruch 8 als vorteilhaft herausgestellt, wenn die Eckprofile ein etwa kreissektorförmiges Profilmittelstück aufweisen, an dessen Sektorseiten sich einstückig je ein C-Profil anschließt, wobei in die C-Profile im Querschnitt etwa T-förmig gestaltete Endleisten der Seitenwände einrückbar sind. Es wird auf diese Art und Weise ein formschlüssige Halteverbindung für die Seitenwände nicht nur in der Nut des Doppelrahmens, sondern auch an den über diesen nach oben hinausragenden Eckprofilen sichergestellt.

Für viele Einsatzzwecke erweist es sich nach der Erfindung auch als wichtig, daß bei einer Palette gemäß Anspruch 9, bei der der Kastenaufsatz mit Zwischenwänden ausrüstbar ist, daß dabei diese Zwischenwände mit ihren unteren Längskanten in die Nuten bzw. Rinnen der Bodenplatte einrückbar sind, die Zwischenwände in einer den Seitenwänden entsprechenden Art und Weise im Querschnitt etwa C-förmige Endleisten haben, die über besondere Verbindungselemente einerseits an die Seitenwände sowie andererseits auch aneinander anschließbar sind. Hierbei hat es sich als besonders bedeutsam herausgestellt, daß nach Anspruch 10 die Verbindungselemente einerseits ein im Querschnitt etwa C-förmiges Halteprofil zur Aufnahme der im Querschnitt etwa T-förmigen Endleisten der Zwischenwände aufweisen sowie andererseits ein Hakenpaar tragen, über das sie in Kupplungsdurchbrüche der Seitenwände und/oder Zwischenwände einhängbar sind.

Wichtig ist hierbei aber auch, daß gemäß Anspruch 11 die beiden Haken des Hakenpaares am Verbindungselement sowohl seitlich als auch in der Höhe versetzt zueinander angeordnet sind, daß neben jedem Haken in der Rückseite des Verbindungselementes eine Mulde eingeformt ist, deren Tiefe mindestens der Dicke des freien Hakenschenkels entspricht, und daß bei zwei auf Umschlag an voneinander abgewendeten Seiten in die Kupplungsdurchbrüche einer Zwischenwand eingehängten Verbindungselementen jeweils die freien Hakenenden des einen Verbindungselementes von den Mulden des anderen Verbindungselementes aufgenommen sind.

Damit in jedem Falle Zwischenwände nur dort innerhalb des Kastenaufsatzes vorgesehen werden können, wo die Bodenplatte des Stützunterbaues jeweils eine Nut bzw. Rinne aufweist, wird nach Anspruch 12 vorgeschlagen, daß die Kupplungsdurchbrüche in den Seitenwänden und in den Zwischenwänden mit einem Abstandsraster vorgesehen sind, das dem Abstandsraster der Nuten bzw.

Rinnen in der Bodenplatte des Stützunterbaues entspricht und daß die Kupplungsdurchbrüche der Seitenwände und der Zwischenwände in zwei mit Abstand übereinanderliegenden Reihen angeordnet sind, wobei in jeder dieser Reihen jeweils zwei Kupplungsdurchbrüche einen Mittenabstand voneinander haben, der dem Mittenabstand zwischen einem Haken und einer beanchbarten Mulde an der Rückseite der Verbindungselemente entspricht. Es wird auf diese Art und Weise sichergestellt, daß zwei auf Umschlag gegeneinander versetzt an verschiedenen Seiten einer Zwischenwand eingebaute Verbindungselemente immer eine exakte Deckungslage zueinander erhalten.

Für einen großen Einsatzbereich der erfindungsgemäßen Paletten hat es sich auch als wesentlich herausgestellt, daß nach Anspruch 13 der Stützunterbau mit seinen Füßen und/oder Laufprofilen sowie dem Rahmen und der Bodenplatte eine Längen- und Breitenabmessung hat, die jeweils einer einfachen oder aber einer mehrfachen Normlänge und Normbreite eines Stapeltransportkastens entspricht, derart, daß einerseits eine entsprechende Anzahl von Stapeltransportkästen innerhalb des Doppelrahmens auf die Bodenplatte setzbar sowie andererseits ein Stützunterbau mit seinen Füßen und/oder Laufprofilen in den Stapelrand des oder der Stapeltransportbehälter einrückbar ist. Zu diesem Zweck wird nach Anspruch 14 weiterhin vorgeschlagen, daß die Füße und/oder Laufprofile jedes Stützunterbaues an ihren unteren Enden entsprechend dem Stapelrandprofil von Stapeltransportkästen mit zurückspringenden Absätzen bzw. Längs- und/oder Querunterbrechungen versehen sind.

Nach der Erfindung können an oder auf den Noppen bzw. Höckern und/oder in den Nuten bzw. Rinnen der Bodenplatte des Stützunterbaues gemäß Vorschlag des Anspruchs 15 Halterungen zur Lagefixierung von Werkstücken oder dergleichen lösbar festgelegt werden, die einerseits auf der Oberseite der Noppen oder Höcker abstützbar sowie andererseits mit Nasen oder Zapfen in die Nuten bzw. Rinnen einrückbar vorgesehen sind, wobei gegebenenfalls die Noppen bzw. Höcker in ihrer Oberseite Löcher bzw. Durchbrüche enthalten, die Befestigungseingriffe für die Halterungen bilden. Dabei ist es nach Anspruch 16 vorteilhaft, wenn die Halterungen Träger für Klemmvorrichtungen sind, die wiederum aus ein- und feststellbaren Exzentern bestehen können.

Für manche Einsatzfälle der Paletten kann es sich auch noch als wichtig erweisen, wenn nach der Lehre des Anspruchs 17 in der Seitenfläche mindestens eines Fußes des Stützunterbaues eine Tasche vorgesehen ist, welche eine Aufnahme für einen auswechselbaren Minisender, einen Markierungsträger oder dergleichen bildet.

Gemäß Anspruch 18 trägt die Bodenplatte des Stützunterbaues an ihrer Unterseite im Abstandsbereich zwischen den Füßen und/oder den Laufprofilen quer verlaufende und nach unten vorspringende Fangleisten, welche Widerlager für die Mitnehmerzapfen von Kettentransportvorrichtungen bilden.

Jeder Stützunterbau kann nach Anspruch 19 mit zwei zueinander parallelen Laufprofilen versehen werden, welche die unteren Enden sämtlicher in der gleichen Reihe hintereinanderliegenden Füße einstückig miteinander verbinden.

Die erfindungsgemäße Palette zeichnet dich dadurch aus, daß die darauf abgelegten bzw. abgesetzten Werkstücke immer einen bestimmten Mindestabstand von der Transportebene bzw. Abstellebene der Palette haben, und daß sie gegen diese Transport- bzw. Abstellebene hin abgeschirmt sind. Darüber hinaus kann die gewissermaßen mit einem Waffelmuster versehene und von dem Rahmen eingeschlossene Bodenplatte verschiedene Funktionen erfüllen. So lassen sich an den Noppen bzw. Höckern und/oder auch in den Nuten bzw. Rinnen die Halterungen für die Werkstücke ausrichten bzw. fixieren. In den Nuten bzw. Rinnen können gegebenenfalls aber auch die Werkstücke unmittelbar selbst ausgerichtet und abgelegt werden. Schließlich bilden die Nuten bzw. Rinnen aber auch noch relativ großvolumige Auffangräume für die von den Werkstücken abtropfenden Behandlungsflüssigkeiten, wie Schneidöl oder dergleichen aus, so daß unerwünschte Verschmutzungen der Abstell- bzw. Lagerplätze sowie auch der Transporteinrichtungen für die Paletten unterbunden werden. In gewissen Zeitabständen können die Paletten aus dem normalen Produktionsablauf einer Reinigungsstation zugeführt werden, in welcher dann die Behandlungsflüssigkeit zweckentsprechend entfernt, aufgefangen und gegebenenfalls auch einer Wiederverwendung zugeführt werden können.

In der Zeichnung sind Ausführungsbeispiele des Gegenstandes der Erfindung dargestellt. Es zeigen

Figur 1 in räumlicher Ansicht von oben eine Aufnahme-, Transport- und Bereitstellungs-Palette, deren eine Bodenplatte aufweisender Stützunterbau einen aus Seitenwänden und Zwischenwänden zusammengesetzten Kastenaufbau trägt,

Figur 2 die Aufnahme-, Transport- und Bereitstellungs-Palette nach Fig. 1 teilweise im Schnitt und teilweise in der Seitenansicht entsprechend der Linie II-II,

Figur 3 die Aufnahme-, Transport- und Bereitstellungs-Palette nach Fig. 1 teilweise im Schnitt und teilweise in Stirnansicht entsprechend der Linie III-III,

Figur 4 in einer der Fig. 2 ähnlichen Darstellung eine Stapelsäule, die teils aus Aufnahme-, Transport-und Bereitstellungs-Paletten und teils aus üblichen Stapeltransportkästen aufgebaut ist,

Figur 5 in größerem Maßstab eine Stirnansicht des in Fig. 1 mit V gekennzeichneten Eckbereichs einer Aufnahme-, Transport- und Bereitstellungs-Palette,

Figur 6 eine Ansicht in Pfeilrichtung VI der Fig. 5,

Figur 7 in räumlicher Sprengdarstellung wesentliche Funktionselemente, die in den Eckbereichen der Aufnahme-, Transport- und Bereitstellungs-Palette eine funktionssichere Verbindung zwischen dem Stützunterbau und dem Kastenaufbau gewährleisten,

Figur 8 in größerem Maßstab die in Fig. 6 mit VIII gekennzeichnete Einzelheit,

Figur 9 eine Ansicht in Pfeilrichtung IX der Fig. 8,

Figur 10 eine Ansicht in Pfeilrichtung X der Fig. 9,

Figur 11 in räumlicher Darstellung einen Ausschnittbereich aus der Bodenplatte des Stützunterbaues mit zugeordneten Zusatz-Funktionsteilen,

Figur 12 eine weiterbildende Ausgestaltung des in Fig. 1 mit XII gekennzeichneten Teilbereichs einer Aufnahme-, Transport- und Bereitstellungs-Palette,

Figur 13 die räumliche Teildarstellung eines Palettenregals mit einer eingesetzten Aufnahme-, Transport- und Bereitstellungs-Palette sowie einem Kettentransport zum Ein- und Ausfahren der Aufnahme-, Transport- und Bereitstellungs-Paletten relativ zum Palettenregal und

Figur 14 eine Teilansicht einer Aufnahme-, Transport- und Bereitstellungs-Palette von unten in Pfeilrichtung XIV der Fig. 13 gesehen.

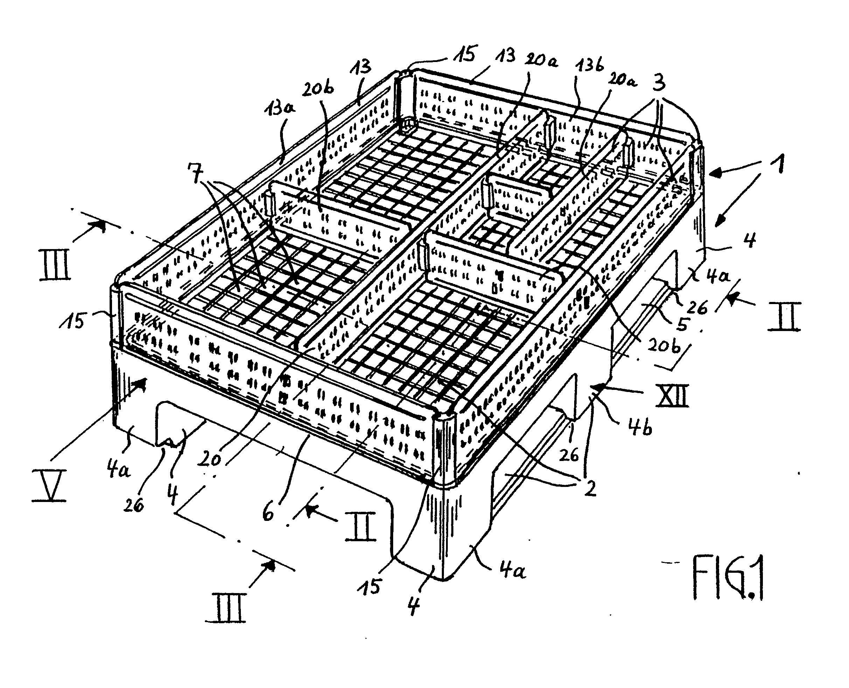

In Fig. 1 der Zeichnung ist in räumlicher Draufsichtdarstellung eine Palette 1 für die Aufnahme, zum Transport und zur Bereitstellung hochwertiger Werkstücke zu sehen, die als Hauptbestandteil einen Stützunterbau 2 aufweist, welcher bedarfsweise wiederum mit einem Kastenaufbau 3 ausgestattet werden kann.

Der Stützunterbau 2 weist einen von Füßen 4, nämlich mindestens Eckfüßen 4a, vorzugsweise aber sowohl von Eckfüßen 4a als auch von Zwischenfüßen 4b sowie von sogenannten Laufprofilen 5 getragenen Rahmen 6 auf, welcher wiederum zu den Füßen 4 und/oder Laufprofilen 5 hin durch eine Bodenplatte 7 abgeschirmt ist.

Der gesamte Stützunterbau 2 mit allen Füßen 4, den Laufprofilen 5, dem Rahmen 6 und der Bodenplatte 7 läßt sich in besonders vorteilhafter Weise als Spritzguß-Formteil aus einem widerstandsfähigen Kunststoffmaterial herstellen.

Ein besonders wesentliches Ausgestaltungsmerkmal des Stützunterbaues 2 liegt darin, daß dessen Bodenplatte eine Profilierung 8 aufweist, die durch eine Vielzahl von abwechselnd hinter- und nebeneinanderliegend vorgesehenen Noppen bzw. Höckern 9 und/oder Nuten bzw. Rinnen 10 gebildet ist.

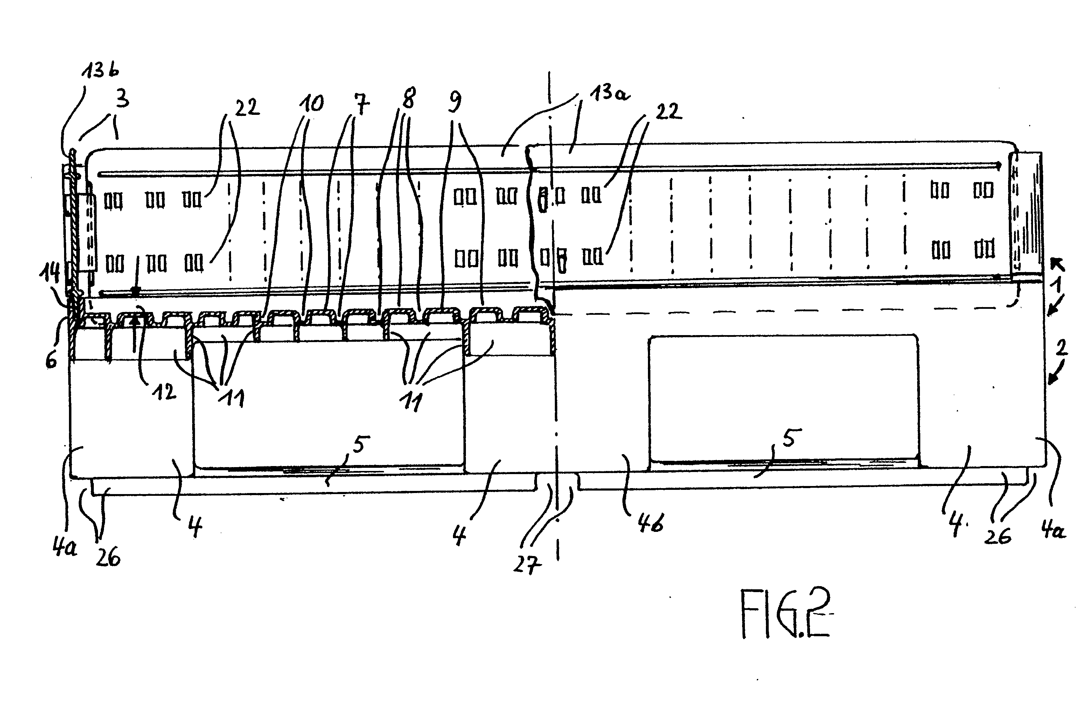

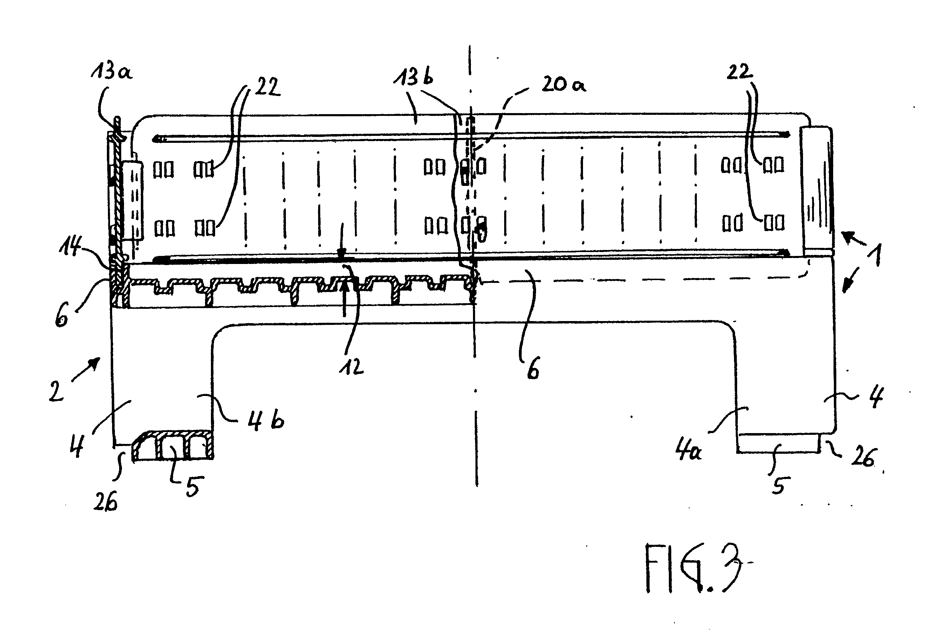

Darüber hinaus hat es sich als besonders vorteilhaft erwiesen, wenn die Bodenplatte 7 an ihrer Unterseite noch mit einer Vielzahl von in Längs- und Querrichtung verlaufenden Versteifungsrippen 11 ausgestattet wird, wie sie besonders deutlich in den Fig. 2 und 3 zu sehen sind.

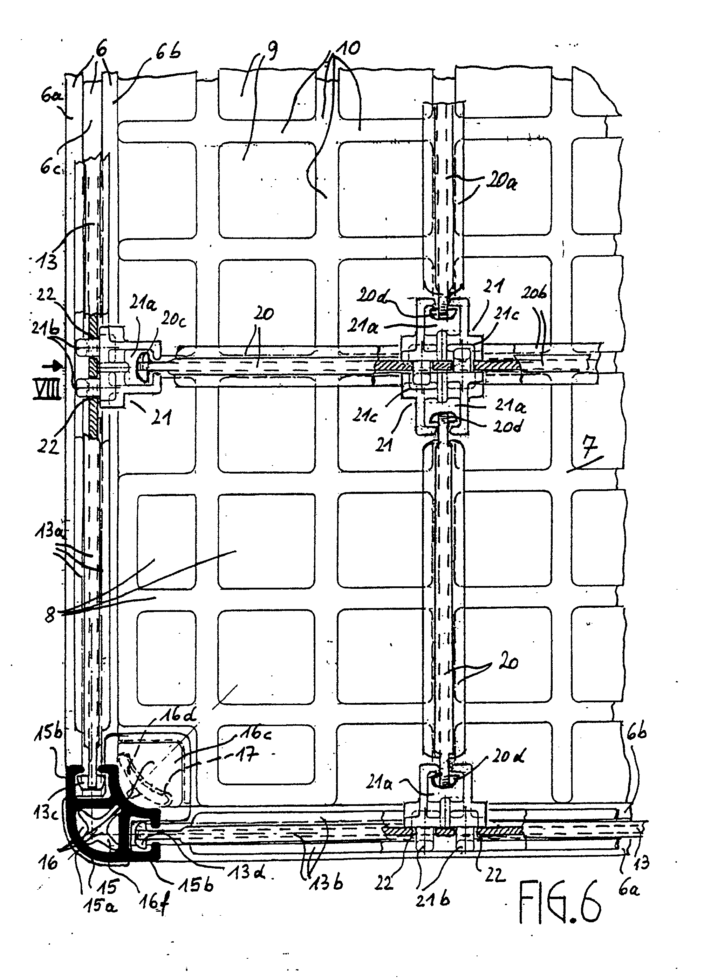

Vorzugsweise wird die Profilierung 8 der Bodenplatte 7 so ausgeführt, daß die Nuten bzw. Rinnen 10 geradlinig und parallel zueinander sowie in zwei sich kreuzenden Richtungen verlaufen und dadurch Noppen bzw. Höcker 9 eingrenzen, die wenigstens annähernd parallel-epipedisch, bspw. quadratisch oder rechteckig begrenzt sind, wie das der Fig. 1, besonders deutlich aber den Fig. 6 und 11 zu entnehmen ist. Dabei ist auch zu erkennen, daß die Breite der Nuten bzw. Rinnen 10 der Profilierung 8 nur einem Bruchteil einer Seitenlänge der Noppen bzw. Höcker 9 entspricht, bspw. hierzu in einem Verhältnis steht, das zwischen 1:3 und 1:5 liegt.

Bewährt hat sich dabei auch, wenn die Tiefe der Nuten bzw. Rinnen 10 der Profilierung 8 mindestens ihrer Breite entspricht. Vielfach kann es jedoch von Vorteil sein, wenn die Nuten bzw. Rinnen 10 tiefer als breit ausgeführt sind.

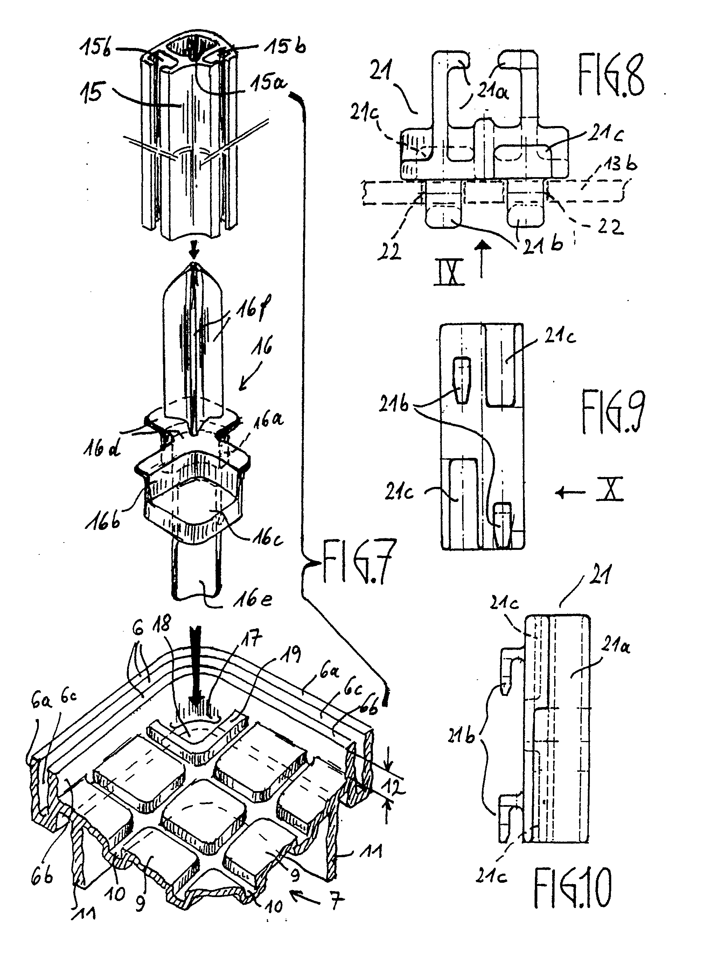

Der die Bodenplatte 7 eingrenzende Rahmen 6 des Stützunterbaues 2 ist als Doppelrahmen ausgeführt, welcher zwei zueinander parallele Stege 6a und 6b aufweist, die durch eine Nut 6c voneinander getrennt sind, wie das besonders deutlich in Fig. 7, aber auch in den Fig. 2, 3, 4 und 6 zu sehen ist. Wichtig ist dabei, daß die Oberkante des Rahmens 6 bzw. Doppelrahmens 6a bis 6c das höchste Niveau der Noppen bzw. Höcker um ein gewisses Maß 12 überragt, welches bspw. in den Fig. 2, 3 und 7 der Zeichnung angedeutet ist. Dieses Maß 12 sollte dabei mindestens so ausgeführt sein, daß es der Tiefe der die Noppen bzw. Höcker 9 gegeneinander abgrenzenden Nuten bzw. Rinnen 10 entspricht.

Andererseits hat es sich aber auch bewährt, wenn die die beiden Stege 6a und 6b des Doppelrahmens 6 gegeneinander abgrenzende Nut 6c mit ihrem Nutgrund etwa auf gleicher Ebene mit dem Grund der die Noppen bzw. Höcker 9 gegeneinander abgrenzenden Nuten bzw. Rinnen 10 liegt, wie das wiederum die Fig. 2, 3 und 7 deutlich erkennen lassen.

Die Nuten bzw. Rinnen 9 in der Bodenplatte 7 kreuzen sich nicht nur jeweils unter einem Winkel von 90° zueinander, sondern haben vorzugsweise darüber hinaus noch eine solche Ausrichtung, daß sie jeweils parallel zu den Seiten des Rahmens 6 bzw. Doppelrahmens 6a bis 6c verlaufen.

In die Nut 6c zwischen den beiden Stegen 6a und 6b des Rahmens 6 können zur Bildung des Kastenaufbaues 3 Seitenwände 13, nämlich Längsseitenwände 13a und Querseitenwände 13b lösbar eingesetzt werden, und zwar mit Hilfe besonderer Fußteile 14, die in ihrer Profilform an die Nut 6c des Rahmens angepaßt sind und in dieser, vorzugsweise mit Klemmsitz, aufgenommen werden können.

An den einander zugewendeten Enden lassen sich dabei die Seitenwände 13 des Kastenaufbaues 3, also jeweils eine Längsseitenwand 13a und eine Querseitenwand 13b über ein besonderes Eckprofil 15 miteinander kuppeln. Vier Eckprofile 15 sind dabei in Fig. 1 der Zeichnung zu sehen, während deren spezielle Ausgestaltung in den Fig. 6 und 7 der Zeichnung gezeigt wird.

Als Träger für die Eckprofile 15 des Kastenaufbaues 3 im Bereich jeder Eckzone des Rahmens 6 bzw. Doppelrahmens 6a bis 6c kommen besondere Adapterstücke 16 zum Einsatz, die in den Fig. 6 und 7 der Zeichnung gezeigt werden.

Jedes dieser Adapterstücke 16 ist als ein Formteil, vorzugsweise aus Kunststoff, gefertigt und weist einen in die Nut 6c zwischen den beiden Stegen 6a und 6b des Rahmens 6 von oben her passend einrückbaren Bogensteg 16a sowie einen an die Innenkontur des inneren Steges 6b angepaßten Stützwinkel 16b auf. Der Stützwinkel 16b ist wiederum an seinen unteren Enden mit einem seine Schenkel einstückig verbindenden, horizontalen Bodenabschnitt 16c sowie an seinem oberen Ende mit einer auf der Winkelhalbierenden zu seinen Schenkeln nach auswärts ragenden, horizontalen Zunge 16d ausgestattet. Darüber hinaus trägt entweder der Stützwinkel 16b oder aber der Bodenabschnitt 16c eine nach unten gerichtete dornartige Verlängerung, die bogenförmig oder auch winkelförmig profiliert sein kann.

Der Bogensteg 16a ist von der Unterseite der Zunge 16d nach abwärts gerichtet, während von deren Oberseite ein dornartiger Fortsatz 16f hochragt, welcher als Halter in eines der Eckprofile 15 eingeführt werden kann, wie das den Fig. 6 und 7 zu entnehmen ist.

Die Bodenplatte 7 des Stützunterbaues 2 enthält in ihren an den Rahmen 6 anschließenden Eckbereichen einerseits jeweils einen Durchbruch 17, durch welche die dornartige Verlängerung 16e eines Adapterstückes 6 hindurchgeführt werden können, und die in ihrer Umrißform auf das Bogen- bzw. Winkelprofil der dornartigen Verlängerung 16e abgestimmt sind. Andererseits ist dort in die Bodenplatte 7 aber auch eine Eckmulde 18 eingeformt, die wiederum durch einen Kragensteg 19 eingegrenzt wird. In dieser Eckmulde 18 wird der Bodenabschnitt 16c des Stützwinkels 16b bündig aufgenommen, wobei es wichtig ist, daß der Kragensteg 19 die Eckmulde 18 über eine Höhe hinweg begrenzt, welche mindestens der Höhe der Noppen bzw. Höcker 9 in der Bodenplatte 7 entspricht.

Die Adaptrstücke 16 können aufgrund ihrer speziellen Ausgestaltung in den Eckbereichen des Rahmens 6 am Stützunterbau 2 besonders sicher festgelegt werden und gewährleisten dadurch auch den Eckprofilen 15 auf dem Stützunterbau 2 einen festen Halt.

Aus den Fig. 6 und 7 ergibt sich, daß jedes Eckprofil 15 ein etwa kreissektorförmiges Profilmittelstück aufweist, an dessen Sektorseiten sich einstückig je ein C-Profil 15b anschließt. Die C-Profile 15b haben dabei eine um 90° zueinander versetzte Winkellage, wie das aus den Fig. 6 und 7 der Zeichnung deutlich hervorgeht.

In das kreissektorförmige Profilmittelstück 15a jedes Eckprofils 15 greift von unten her der dornartige Fortsatz 16f eines Adapterstückes 16 mit einem etwa kreuzartigen Profilquerschnitt passend, vorzugsweise klemmend, ein, wie das deutlich der Fig. 6 zu entnehmen ist.

Mit jedem an das kreissektorförmige Profilmittelstück 15a anschließenden C-Profil 15b lassen sich die Seitenwände 13, nämlich die Längsseitenwände 13a und die Querseitenwände 13b über eine etwa T-förmig gestaltete Endleiste 13c bzw. 13d in Halteeingriff bringen, wie das ebenfalls aus Fig. 6 deutlich hervorgeht.

Der Kastenaufbau 3 kann zusätzlich zu den Seitenwänden 13, nämlich den Längsseitenwänden 13a und den Querseitenwänden 13b noch mit Zwischenwänden 20, nämlich Längszwischenwänden 20a und Querzwischenwänden 20b, ausgestattet werden, wie das in den Fig. 1 und 13 angedeutet sowie auch in Fig. 6 verdeutlicht zu sehen ist.

Die Zwischenwände 20, nämlich die Längszwischenwände 20a und die Querzwischenwände 20b entsprechen in ihrer Ausgestaltung grundsätzlich den Seitenwänden 13, nämlich den Längsseitenwänden 13a und den Querseitenwänden 13b. Sie sind lediglich hinsichtlich ihrer Baulänge unterschiedlich ausgeführt, damit eine Vielzahl verschiedener Fachgrößen innerhalb des Kastenaufbaues 3 geschaffen werden können, wie das in Fig. 1 zu sehen ist.

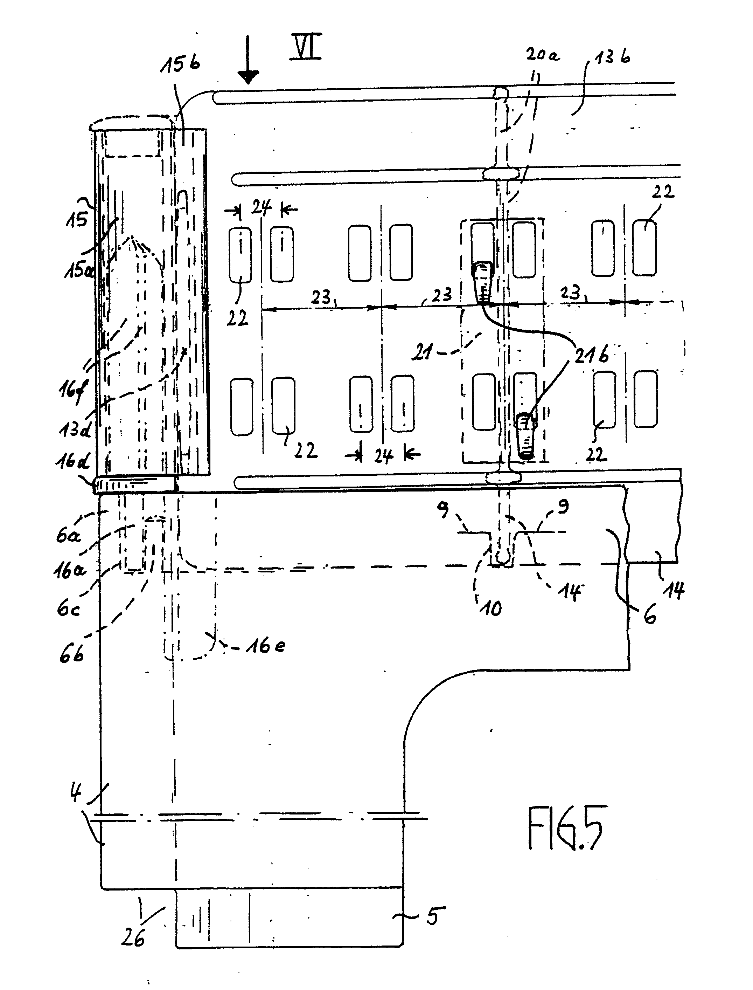

Mit ihren Fußteilen 14 werden die Zwischenwände 20, nämlich sowohl die Zwischenwände 20a als auch die Querzwischenwände 20b in die Nuten bzw. Rinnen 10 der Profilierung 8 der Bodenplatte 7 eingesetzt, wie das die Fig. 5 und 6 erkennen lassen.

In einer den Seitenwänden 13, nämlich Längsseitenwänden 13a und Querseitenwänden 13b, entsprechenden Art und Weise haben auch die Zwischenwände 20, nämlich die Längszwischenwände 20a und die Querzwischenwände 20b im Querschnitt T-förmige Endleisten 20C bzw. 20d, welche über besondere Verbindungselemente 21 einerseits an die Seitenwände 13 sowie andererseits auch aneinander anschließbar sind, wie das insbesondere die Fig. 5 und 6 deutlich machen.

Für das Zusammenwirken mit den Endleisten 20C bzw. 20d der Zwischenwände 20 weisen die Verbindungselemente 21 ein im Querschnitt etwa C-förmiges Halteprofil 21a auf, welches in seiner Form den C-Profilen 15b der Eckprofile 15 angepaßt ist.

Damit die Verbindungselemente 21 sich andererseits mit den Seitenwänden 13 und/oder auch mit den Zwischenwänden 20 kuppeln lassen, weisen sie an ihrer dem C-förmigen Halteprofil 21a abgewendeten Seitenfläche noch ein besonderes Hakenpaar 21b auf. Mittels dieses Hakenpaares 21b kann dabei jedes Verbindungselement 21 in Kupplungsdurchbrüche 22 eingehängt werden, die sich sowohl in den Seitenwänden 13 als auch in den Zwischenwänden 20 befinden, wie das deutlich in einer Vielzahl von Zeichnungsfiguren zu sehen ist.

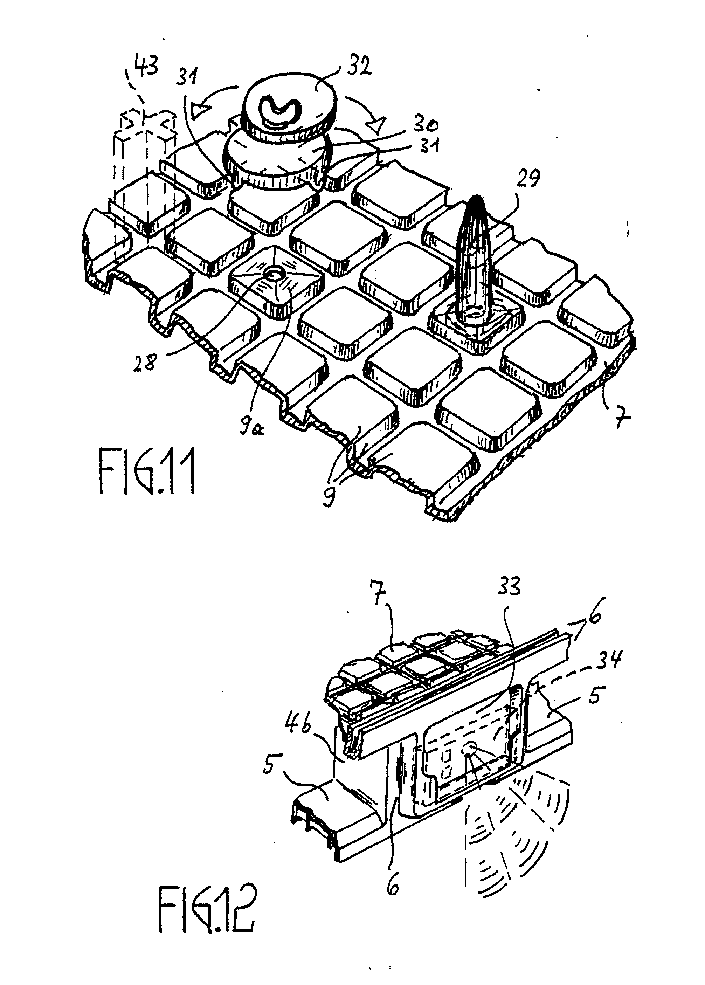

Insbesondere die Fig. 9 und 10 der Zeichnung lassen erkennen, daß die beiden Haken jedes Hakenpaares 21b am Verbindungselement 21 sowohl seitlich als auch in der Höhe versetzt zueinander angeordnet werden können, um einen optimalen Halteeingriff in Kupplungsdurchbrüche 22 der Seitenwände 13 und der Zwischenwände 20 zu ermöglichen, die in zwei mit Abstand übereinanderliegenden Reihen mit einem vorgegebenen Abstandsraster angeordnet sind, wie das eine Vielzahl von Zeichnungsfiguren erkennen lassen. Der Seitenversatz und der Höhenversatz der Kupplungsdurchbrüche in den Seitenwänden 13 und in den Zwischenwänden 20 ist dabei natürlich auf den Seiten- und Höhenversatz beider Haken jedes Hakenpaares 21b abgestimmt, während das Abstandsraster für diese Kupplungsdurchbrüche 22 dem Mittenabstand zwischen den Nuten bzw. Rinnen 10 in der Bodenplatte 7 des Stützunterbaues 2 entspricht.

Die besondere Art und Weise der Anordnung beider Haken eines Hakenpaares 21b an der Rückseite der Verbindungselemente 21 bietet auch die vorteilhafte Möglichkeit, zwei identische Verbindungselemente 21 auf Umschlag an voneinander abgewendeten Seitenflächen der Zwischenwände 20 zu fixieren, wie dies deutlich aus Fig. 6 hervorgeht. Zu diesem Zweck ist es jedoch nötig, neben jedem einzelnen Haken eines Hakenpaares 21b in der Rückseite des betreffenden Halteelementes 21 eine Mulde einzuformen, deren Tiefe mindestens der Dicke des freien Hakenschenkels entspricht. Die Anordnung und Ausbildung dieser Mulden 21c ist dabei in den Fig. 8 bis 10 der Zeichnung besonders deutlich zu entnehmnen.

Bei zwei auf Umschlag an voneinander abgewendeten Seiten in die Kupplungsdurchbrüche 22 einer Zwischenwand 20 eingehängten Verbindungselementen 21 werden dann jeweils die freien Hakenenden des einen Verbindungselementes 21 von den Mulden 21c des anderen Verbindungselementes 21 problemlos aufgenommen.

Bezüglich der Kupplungsdurchbrüche 22 in den Seitenwänden 13 und den Zwischenwänden 20 ist darauf hinzuweisen, daß diese nicht nur in zwei mit Abstand übereinanderliegenden Reihen angeordnet sind, sondern daß darüber hinaus in jeder dieser Reihen jeweils zwei unmittelbar nebeneinanderliegende Kupplungsdurchbrüche 22 einen Mittenabstand voneinander haben, welcher dem Mittenabstand zwischen einem Haken des Hakenpaares 21b und einer der diesem Haken benachbarten Mulden 21c an der Rückseite der Verbindungselemente 21 entspricht. Der Mittenabstand zwischen diesen einander benachbarten Kupplungsdurchbrüchen 22 muß dabei nicht dem Abstandsraster der Kupplungsdurchbrüche entsprechen. Vielmehr ist es vorteilhaft, wenn dieser Mittenabstand zwischen benachbarten Kupplungsdurchbrüchen 22 kleiner bemessen ist als das Maß des Abstandsrasters. Diese Tatsache ist einer Vielzahl von Zeichnungsfiguren zu entnehmen. Besonders deutlich ergibt sich jedoch aus Fig. 5, daß das Abstandsraster 23 der Kupplungsdurchbrüche 22 größer bemessen ist als der Mittenabstand 24 zwischen zwei in einer Reihe unmittelbar nebeneinander angeordneten Kupplungsdurchbrüchen.

Aus Fig. 5 geht auch deutlich hervor, daß das Hakenpaar 21b der Verbindungselemente 21 nicht mit zwei senkrecht übereinanderliegenden Kupplungsdurchbrüchen 22 der beiden Durchbruchreihen zusammenwirkt, sondern mit zwei um den Mittenabstand 24 gegeneinander versetzten Kupplungsdurchbrüchen 22.

Selbstverständlich lassen sich die Kupplungshaken jedes Hakenpaares 21b in ihrer Form so gestalten, daß sie einerseits ein leichtes Einführen in die Kupplungsdurchbrüche 22 gewährleisten, andererseits in ihrer Wirkstellung aber einen sicheren Halteeingriff in diese Kupplungsdurchbrüche gewährleisten. Die freien Hakenschenkel sind zu diesem Zweck vorteilhaft so gestaltet, daß sie sich in zwei rechtwinklig aufeinanderstehenden Ebenen zum Hakenende hin keilförmig verjüngen.

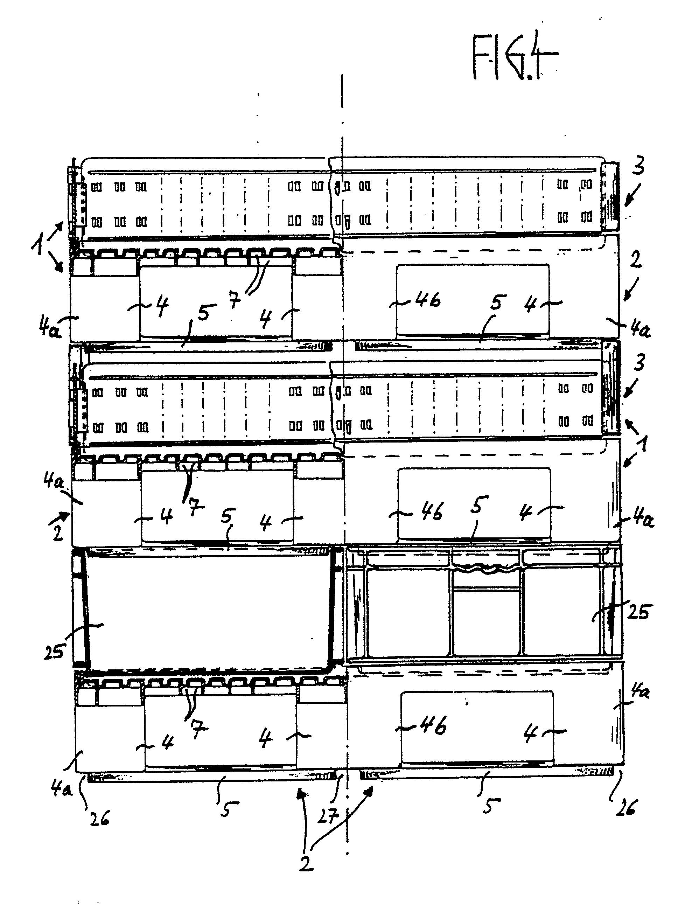

In Fig. 4 der Zeichnung ist angedeutet, daß der Stützunterbau 2 eine Aufnahme-, Transport- und Bereitstellungs-Palette 1 nicht in jedem Falle mit einem Kastenaufbau 3 versehen werden muß, sondern sich vielmehr auch ohne einen solchen Kastenaufbau 3 in Benutzung nehmen läßt.

So ist der untere Stützunterbau 2 nach Fig. 4 ohne Kastenaufbau 3 in Benutzung genommen, und zwar als Träger für mindestens einen, vorzugsweise aber mehrere Stapeltransport kästen 25. Der Stützunterbau 2 hat zu diesem Zweck mit seinen Füßen 4 und/oder Laufprofilen 5 sowie dem Rahmen 6 und der Bodenplatte 7 eine Längen- und Breitenabmessung, die jeweils einer einfachen oder aber einer mehrfachen Normlänge und Normbreite eines solchen Stapeltransportkastens 25 entspricht. Daher ist es einerseits möglich, eine entsprechende Anzahl von Stapeltransportkästen 25 innerhalb des Rahmens 6 auf die Bodenplatte 7 eines Stützunterbaues 2 zu setzen. Andererseits kann aber auch ein weiterer Stützunterbau 2 mit seinen Füßen 4 und/oder Laufprofilen 5 in den Stapelrand des oder der Stapeltransportkästen 25 eingesetzt werden, wie das in Fig. 4 der Zeichnung deutlich zu sehen ist.

Um das Eingreifen der Füße 4 bzw. 4a und 4b und/oder der Laufprofile 5 in den Stapelrand der Stapeltransportkästen 25 zu ermöglichen, sind sie an den unteren, umlaufenden Kanten mit dem Stapelrandprofil entsprechenden Einschnürungsabschnitten 26 ausgestattet, welche zumindst in den Fig. 1 bis 5 der Zeichnung zu sehen sind. Außerdem haben die Laufprofile 5 unterhalb der Zwischenfüße 4b noch eine Unterbrechung 27, die in ihren Abmessungen auf die Stapelränder zweier benachbart aufgestellter Stapeltransportkästen abgestimmt sind, wie das in den Fig. 2 und 4 zu sehen ist.

Die beiden oberen Aufnahme-, Transport- und Bereitstellungs-Paletten 1 der in Fig. 4 gezeigten Stapelsäule sind wiederum mit einem Kastenaufbau 3 ausgestattet, wie er auch schon anhand der Fig. 1 bis 3 sowie 5 bis 10 der Zeichnungen erläutert worden ist.

Den Noppen bzw. Höckern 9 und Nuten bzw. Rinnen 10 der Profilierung 8 in der Bodenplatte 7 kommt nicht nur die weiter oben bereits erwähnte Aufgabe zu, die Fußteile 14 der Zwischenwände 20, nämlich sowohl der Längszwischenwände 20a als auch der Querzwischenwände 20b, aufzunehmen und zu fixieren. Vielmehr haben diese Funktionselemente noch verschiedene andere Aufgaben zu erfüllen. So sollen die Nuten bzw. Rinnen 10 in der Bodenplatte 7 auch dazu dienen, von den Werkstücken abtropfende Flüssigkeiten, bspw. Schneid- oder Schmieröl so aufzufangen und zu sammeln, daß diese nicht an unerwünschten Stellen von der Aufnahme-, Transport- und Bereitstellungs-Palette 1 abfließen und Verschmutzungen verursachen können. Noppen bzw. Höcker 9 und Nuten bzw. Rinnen 10 können aber auch unmittelbar zur Halterung bzw. Lagenfixierung kleinerer Werkstücke genutzt werden, wenn diese sich mit bestimmten Teilabschnitten in die Nuten bzw. Rinnen 10 einrücken lassen.

Wenn die Noppen bzw. Höcker 9 der Profilierung 8 mit ihren nach aufwärts gerichteten Flächenbereichen 9a Öffnungen oder Vertiefungen 28 erhalten, lassen sich hierin auf einfache Art und Weise Fixierdorne 29 oder dergleichen verankern, die zu einer verschiebesicheren Festlegung von Werkstücken relativ zur Bodenplatte 7 genutzt werden können, wie das aus Fig. 11 hervorgeht.

Andererseits ist es aber auch möglich, in jedem Kreuzungsbereich zwischen zwei Nuten bzw. Rinnen 10 auf vier einander benachbarten Noppen bzw. Höckern 9 eine Halteplatte 30 abzustützen, die mit nach unten vorspringenden Nocken oder Zapfen 31 in den Nuten bzw. Rinnen 10 drehfest verrastbar ist. Diese Halteplatte 30 kann dabei eine drehverstellbare Exzenter-Klemmvorrichtung 32 tragen, die sich gegen ein auf der Bodenplatte 7 ruhendes Werkstück anstellen sowie in der Anstellage relativ zur Halteplatte 30 fixieren lassen.

Schließlich ist in Fig. 11 aber auch noch - durch gestrichelte Linien - angedeutet, daß sich Fixierstäbe 43 mit kreuzförmigem Profil unmittelbar im Kreuzungsbereich zwischen zwei Nuten bzw. Rinnen 10 zwischen den Seitenflächen von vier einander benachbarten Noppen bzw. Höckern 9 festlegen lassen, die dann zur Lagensicherung von Werkstücken auf der Bodenplatte 7 nutzbar gemacht werden können.

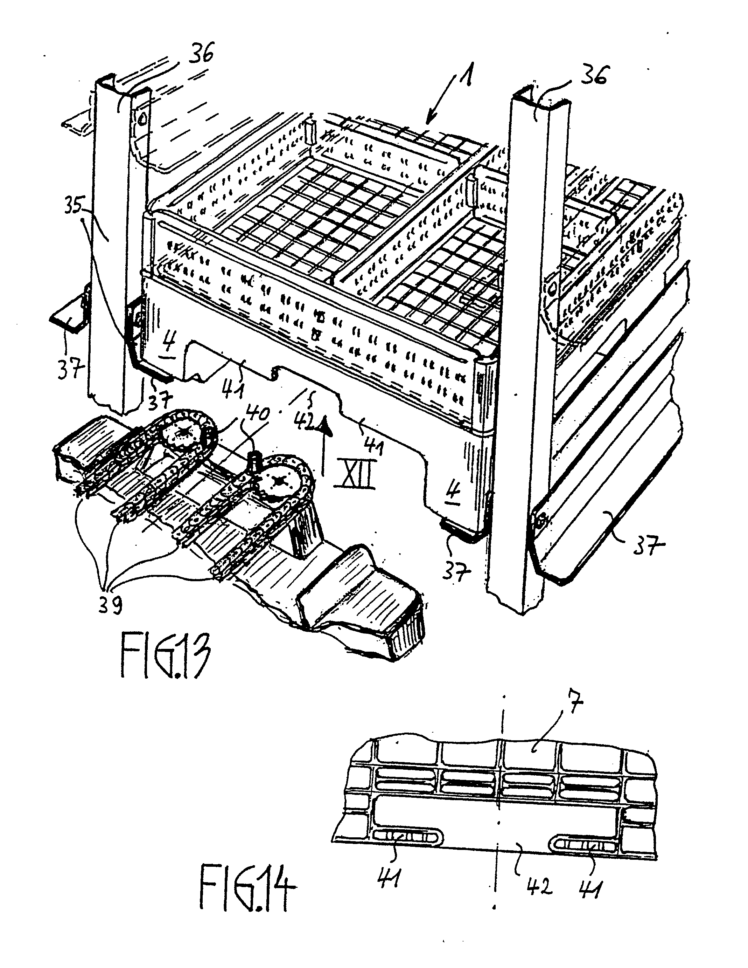

In Fig. 12 der Zeichnung ist zu sehen, daß auch die Möglichkeit besteht, die auswärts gerichteten Seitenflächen der Füße 4, und zwar insbesondere der Zwischenfüße 4b, des Stützunterbaues 2 mit einer wenigstens in ihrem Unterteil hinterschnitten ausgestalteten Tasche zu versehen, welche als eine Aufnahme für einen auswechselbaren Minisender 34, für Markierungsträger oder dergleichen genutzt werden kann.

In Fig. 13 der Zeichnung ist dargestellt, daß sich Aufnahme-, Transport- und Bereitstellungs-Paletten 1 der vorstehend anhand der Fig. 1 bis 12 beschriebenen Bauart auch in Palettenregale 35 einstellen lassen, von denen in Fig. 13 nur zwei aufrechte Pfosten 36 und daran befestigte, horizontale Trägerschienen 37 zu sehen sind.

Zum Ein- und Ausfahren der Aufnahme-, Transport- und Bereitstellungs-Paletten 1 relativ zum Palettenregal 35 kann dabei eine Auslegerplattform 38 mit zwei synchron arbeitenden Kettentransporten 39 benutzt werden.

Jeder der beiden Kettentransporte 39 kann dabei über Mitnehmerzapfen 40 mit der jeweils ein- bzw. auszufahrenden Aufnahme-, Transport- und Bereitstellungs-Palette 1 in Wirkverbindung treten. Zu diesem Zweck ist gemäß Fig. 14 die Bodenplatte 7 des Stützunterbaues 2 an ihrer Unterseite im Abstandsbereich zwischen den Füßen 4 und/oder den Laufprofilen 5 mit querverlaufenden sowie nach unten vorspringenden Fangleisten 41 ausgestattet, deren einander zugewendete Enden Abstand voneinander haben und einen Durchlaß 42 begrenzen. Durch diesen Durchlaß 42 treten zunächst die Mitnehmerzapfen 40 in den Bereich der Fangleisten 41 und verlagern sich dann im Umlenkbereich jedes einzelnen Kettentransportes 39 seitwärts hinter die Fangleisten 41. Solange daher die Mitnehmerzapfen 40 sich im Bereich der Fangleisten 41 befinden, wird die betreffende Aufnahme-, Transport- und Bereitstellungs-Palette 1 relativ zur Auslegerplattform 38 bzw. zu den Trägerschienen 37 des Palettenregals 35 in Längsrichtung verschoben.

Aus der linken Hälfte der Fig. 3 ist noch zu entnehmen, daß die Bodenplatte 7 mit ihrer Profilierung 8 sowie den Versteifungsrippen 11 teilweise oberhalb der sich in Paletten-Längsrichtung erstreckenden Laufprofile 5 befindet.

Damit sich ein durch Spritzgießen aus Kunststoff hergestellter Stützunterbau 2 aus dem Spritzwerkzeug entfernen läßt, muß zumindest im Überdeckungsbereich zwischen den Laufprofilen 5 sowie der Bodenplatte 7 mit einem Doppelschieber gearbeitet werden. Der untere Schieber ist dabei in waagerechter Richtung oberhalb der Oberseite der Laufprofile 5 ein- und ausgefahren, während der obere Schieber sich zuvor bzw. nachfolgend in vertikaler Richtung verlagern läßt, um den Formhohlraum für die Bodenplatte 7 und deren Versteifungsrippen 11 zu schließen bzw. freizugeben.

Abschließend sei hier noch erwähnt, daß jeder Stützunterbau 2 für eine Aufnahme-, Transport- und Bereitstellungs-Palette 1 mit zwei zueinander parallelen Laufprofilen 5 versehen ist, welche die unteren Enden sämtlicher in der gleichen Reihe hintereinanderliegender Füße 4 bzw. 4a einstückig miteinander verbindet.

**Ansprüche**

1. Aufnahme-, Transport- und Bereitstellung-Palette für Werkstücke, insbesondere hochwertige Werkstücke, mit einem Stützunterbau und von diesem getragenen Werkstückauflagen, wobei der Stützunterbau (2) einen von Füßen (4 bzw. 4a, 4b) und/oder Laufprofilen (5) getragenen Rahmen (6) aufweist, der zu den Füßen (4 bzw. 4a, 4b) und/oder Laufprofilen (5) hin durch eine Bodenplatte (7) abgeschirmt ist, die eine durch eine Vielzahl von abwechselnd hinter- und nebeneinanderliegend vorgesehenen Noppen bzw. Höckern (9) und/oder Nuten bzw. Rinnen (10) gebildete Profilierung (8) aufweist und die Nuten bzw. Rinnen (10) in der Bodenplatte (7) geradlinig und parallel zueinander sowie in zwei sich kreuzenden Richtungen verlaufen sowie eine zu den Seitenbegrenzungen des Rahmens parallele Ausrichtung haben,

**dadurch gekennzeichnet,**

daß der Rahmen (6) als ein Doppelrahmen mit zwei zueinander parallelen und durch eine Nut (6c) voneinander getrennten Stegen (6a und 6b) ausgebildet ist.

3. Palette nach Anspruch 1,

**dadurch gekennzeichnet,**

daß die Oberkante des Doppelrahmens (6a bis 6c) das höchste Niveau der Noppen bzw. Höcker (9) an der Bodenplatte (7) um ein gewisses Maß (12) überragt.

3. Palette nach Anspruch 2,

**dadurch gekennzeichnet,**

daß die Oberkante des Rahmens (6) um ein Maß (12) über das höchste Niveau der Noppen bzw. Höcker (9) an der Bodenplatte (7) hochragt, welches mindestens der Tiefe der die Noppen bzw. Höcker (9) gegeneinander abgrenzenden Nuten bzw. Rinnen (10) entspricht.

4. Palette nach einem der Ansprüche 1 bis 3,

**dadurch gekennzeichnet,**

daß die die beiden Stege (6a und 6b) des Doppelrahmens (6a bis 6c) gegeneinander abgrenzende Nut (6c) mit ihrem Nutgrund etwa auf gleicher Ebene mit dem Grund der die Noppen bzw. Höcker (9) gegneinander abgrenzenden Nuten bzw. Rinnen (10) liegt.

5. Palette nach einem der Ansprüche 1 bis 4,

**dadurch gekennzeichnet,**

daß in die Nut (6c) zwischen den Stegen (6a und 6b) des Doppelrahmens (6a bis 6c) Seitenwände (13 bzw. 13a, 13b) mit angepaßten Fußteilen (14) lösbar einzusetzen sowie an ihren Enden jeweils über Eckprofile (15) zur Bildung eines Kastenaufbaues (3) miteinander verbindbar sind.

6. Palette nach einem der Ansprüche 1 bis 5,

**dadurch gekennzeichnet,**

daß als Träger für die Eckprofile (15) im Bereich der Eckzonen des Doppelrahmens (6a bis 6c) Adapterstücke (16) lösbar einzusetzen sind, die wenigstens einen in die Nut (6c) zwischen beiden Rahmenstegen (6a und 6b) einrückbaren Bogensteg (16a) sowie einen an die Innenkontur des inneren Rahmensteges (6b) angepaßten Stützwinkel (16b) aufweisen.

7. Palette nach Anspruch 9,

**dadurch gekennzeichnet,**

daß der Stützwinkel (16b) an seinem unteren Ende einen seine Schenkel einstückig verbindenden, horizontalen Bodenabschnitt (16c) und an seinem oberen Ende eine auf der winkelhalbierenden zu seinen Schenkeln nach auswärts ragende, horizontale Zunge (16d) trägt, wobei einerseits der Stützwinkel (16b) bzw. der Bodenabschnitt (16c) eine nach unten über den Bodenabschnitt (16c) hinausragende, dornartige Verlängerung (16e) mit Bogen- bzw. Winkelprofil trägt, während andererseits die Zunge (16d) an ihrer Unterseite den Bogensteg (16a) hält und von ihrer Oberseite ein dornartiger Fortsatz (16f) hochragt, der als Halter in ein Eckprofil (15) einrückbar ist und daß die Bodenplatte (7) in ihren an den Rahmen (6) anschließenden Eckbereichen Durchbrüche (17) enthält, die der Aufnahme der dornartigen Verlängerung (16e) der Adapterstücke (16) dienen und deren Bogen- bzw. Winkelprofile angepaßt sind,

daß der Bodenabschnitt (16c) am Stützwinkel (16b) der Adapterstücke (16) in eine Eckmulde (18) der Bodenplatte (7) versenkbar ist, und

daß jede Eckmulde (18) durch einen Kragensteg (19) begrenzt ist, dessen Höhe der Höhe der Noppen bzw. Höcker (9) entspricht.

8. Palette nach einem der Ansprüche 5 bis 7,

**dadurch gekennzeichnet,**

daß die Eckprofile (15) ein etwa kreissektorförmiges Profilmittelstück (15a) aufweisen, an dessen Sektorseiten sich einstückig je ein C-Profil (15b) anschließt, wobei in beide C-Profile (15b) im Querschnitt etwa T-förmig gestaltete Endleisten (13c) der Seitenwände (13 bzw. 13a, 13b) einrückbar sind.

9. Palette nach einem der Ansprüche 1 bis 8, bei der der Kastenaufsatz (3) mit Zwischenwänden (20 bzw. 20a, 20b) ausrüstbar ist und dabei diese Zwischenwände (20 bzw. 20a, 20b) mit ihren unteren Längskanten bzw. Fußteilen (14) in die Nuten bzw. Rinnen (10) der Bodenplatte (7) einrückbar sind,

**dadurch gekennzeichnet,**

daß die Zwischenwände (20 bzw. 20a, 20b) in einer den Seitenwänden entsprechenden Art und Weise im Querschnitt etwa T-förmige Endleisten (20C bzw. 20d) haben, die über besondere Verbindungselemente (21) einerseits an die Seitenwände (13 bzw. 13a, 13b) sowie andererseits auch aneinander anschließbar sind.

10. Palette nach Anspruch 9,

**dadurch gekennzeichnet,**

daß die Verbindungselemente (21) einerseits ein im Querschnitt etwa C-förmiges Halteprofil (21a) zur Aufnahme der im Querschnitt etwa T-förmigen Endleisten (20C bzw. 20d) der Zwischenwände (20 bzw. 20a, 20b) aufweisen sowie andererseits ein Hakenpaar (21b) tragen, über das sie in Kupplungsdurchbrüche (22) der Seitenwände (13 bzw. 13a, 13b) und/oder Zwischenwände (20 bzw. 20a, 20b) einhängbar sind.

11. Palette nach Anspruch 10,

**dadurch gekennzeichnet,**

daß die beiden Haken des Hakenpaares (21b) am Verbindungselement (21) sowohl seitlich als auch in der Höhe versetzt zueinander angeordnet sind,

daß neben jedem Haken in der Rückseite des Verbindungselementes (21) eine Mulde (21c) eingeformt ist, deren Tiefe mindestens der Dicke des freien Hakenschenkels entspricht, und

daß bei zwei auf Umschlag an voneinander abgewendeten Seiten in die Kupplungsdurchbrüche (22) einer Zwischenwand (20 bzw. 20a, 20b) eingehängten Verbindungselementen (21) jeweils die freien Hakenenden des einen Verbindungselementes (21) von den Mulden (21c) des anderen Verbindungselementes (21) aufgenommen sind.

12. Palette nach einem der Ansprüche 9 bis 11,

**dadurch gekennzeichnet,**

daß die Kupplungsdurchbrüche (22) in den Seitenwänden (13 bzw. 13a, 13b) und in den Zwischenwänden (20 bzw. 20a, 20b) mit einem Abstandsraster (23) vorgesehen sind, das dem Abstandsraster der Nuten bzw. Rinnen (10) in der Bodenplatte (7) des Stützunterbaues (2) entspricht und daß die Kupplungsdurchbrüche (22) der Seitenwände (13 bzw. 13a, 13b) und der Zwischenwände (20 bzw. 20a, 20b) in zwei mit Abstand übereinanderliegenden Reihen angeordnet sind, wobei in jeder dieser Reihen jeweils zwei Kupplungsdurchbrüche (22) einen Mittenabstand (24) voneinander haben, der dem Mittenabstand zwischen einem Haken des Hakenpaares (21b) und einer benachbarten Mulde (21c) an der Rückseite der Verbindungselemente (21) entspricht.

13. Palette nach einem der Ansprüche 1 bis 4,

**dadurch gekennzeichnet,**

daß der Stützunterbau (2) mit seinen Füßen (4 bzw. 4a, 4b) und/oder Laufprofilen (5) sowie dem Rahmen (6) und der Bodenplatte (7) eine Längen- und Breitenabmessung hat, die jeweils einer einfachen oder aber einer mehrfachen Normlänge und Normbreite eines Stapeltransportkastens (25) entspricht, derart, daß einerseits eine entsprechende Anzahl von Stapeltransportkästen (25) inner halb des Rahmens (6) auf die Bodenplatte (7) setzbar sowie andererseits ein Stützunterbau (2) mit seinen Füßen (4 bzw. 4a, 4b) und/oder Laufprofilen (5) in den Stapelrand des oder der Stapeltransportkästen (25) einrückbar ist.

14. Palette nach Anspruch 13,

**dadurch gekennzeichnet,**

daß die Füße (4 bzw. 4a, 4b) und/oder Laufprofile (5) jedes Stützunterbaues (2) an ihren unteren Enden entsprechend dem Stapelrandprofil von Stapeltransportkästen (25) mit zurückspringenden Einschnürungsabschnitten (26) bzw. Längs- und/oder Querunterbrechungen (27) versehen sind.

15. Palette nach Anspruch 1,

**dadurch gekennzeichnet,**

daß an oder auf den Noppen bzw. Höckern (9) der Profilierung (7) der Bodenplatte Halterungen (29, 30, 43) zur Lagenfixierung von Werkstücken oder dergleichen lösbar festzulegen sind und daß die Halterungen (30) einerseits auf der Oberseite der Noppen oder Höcker (9) abstützbar sowie andererseits mit Nasen oder Zapfen (31) in die Nuten bzw. Rinnen (10) einrückbar sind, wobei gegebenenfalls die Noppen bzw. Höcker (9) in ihrer Oberseite Löcher bzw. Durchbrüche oder Vertiefungen (28) enthalten, die Befestigungseingriffe für die Halterungen (29) bilden.

16. Palette nach Anspruch 15,

**dadurch gekennzeichnet,**

daß die Halterungen (30) Träger für Klemmvorrichtungen (32) sind, die aus ein- und feststellbaren Exzentern bestehen.

17. Palette nach Anspruch 1,

**dadurch gekennzeichnet,**

daß in der Seitenfläche mindestens eines Fußes (4 bzw. 4b) des Stützunterbaues (2) eine Tasche (33) vorgesehen ist, welche eine Aufnahme für einen auswechselbaren Minisender (34), einen Markierungsträger oder dergleichen bildet.

18. Palette nach Anspruch 1,

**dadurch gekennzeichnet,**

daß die Bodenplatte (7) des Stützunterbaues (2) an ihrer Unterseite im Abstandsbereich zwischen den Füßen (4 bzw. 4a, 4b) und/oder den Laufprofilen (5) querverlaufende und nach unten vorspringende Fangleisten (41) trägt, welche Widerlager für die Mitnehmerzapfen (40) von Kettentransportvorrichtungen (39) bilden.

19. Palette nach Anspruch 1,

**dadurch gekennzeichnet,**

daß jeder Stützunterbau (2) mit zwei zueinander parallelen Laufprofilen (5) versehen ist, welche die unteren Enden sämtlicher in der gleichen Reihe hintereinanderliegender Füße (4 bzw. 4a, 4b) einstückig miteinander verbinden.

FIG.1

FIG.2

EP 0 416 446 A1

FIG.3

EP 0 416 446 A1

FIG.4

FIG.5

FIG.6

FIG.7

FIG.8

FIG.9

FIG.10

FIG.11

FIG.12

FIG.13

FIG.14

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | US-A-3664570 (KUPERSMIT) <br> * Figuren 1, 2 * <br> --- | 1, 5, 19 | B65D19/18 <br> B23Q7/14 |
| A | DE-A-2264595 (NANIA) <br> * Anspruch 1; Figuren 1, 2 * <br> --- | 1, 19 | |
| A | DE-U-8700782 (SW METALLGERÄTE) <br> * Seite 7, Zeile 20 - Seite 8, Zeile 2; Figuren 1, 7-9 * <br> --- | 1, 5, 6, 8 | |
| A | DE-A-2419088 (OSSBAHR) <br> * Figur 1 * <br> --- | 1 | |
| A | EP-A-0309444 (MASCHINENFABRIK HEID) <br> * Spalte 1, Zeilen 3 - 9; Figur 2 * <br> ----- | 1 | |

RECHERCHIERTE
SACHGEBIETE (Int. Cl.5 )

B65D
B23Q

Der vorliegende Recherchenbericht wurde für alle Patentansprüche erstellt

| Recherchenort | Abschlußdatum der Recherche | Prüfer |
|---|---|---|
| BERLIN | 05 DEZEMBER 1990 | SPETTEL, J.D.M.L. |